# EUROPÄISCHE PATENTSCHRIFT

(11) **EP 0 603 225 B1**
(45) Veröffentlichungstag und Bekanntmachung des Hinweises auf die Patenterteilung: **04.06.1997**
(21) Anmeldenummer: 92918319.2
(22) Anmeldetag: 01.09.1992
(51) Int. Cl.: C07F 9/535

(54) **VERFAHREN ZUR HERSTELLUNG VON alpha-CHLOR-METHYLEN-TRIORGANYLPHOSPHORAN-DERIVATEN**
PROCESS FOR PRODUCING alpha-CHLOR-METHYLEN-TRIORGANYLPHOSPHORANE DERIVATES
PROCEDE POUR LA FABRICATION DE DERIVES D'alpha-CHLORE-METHYLENE-TRIORGANYLPHOSPHORANE

(30) Priorität: 12.09.1991 DE 4130296
(43) Veröffentlichungstag der Anmeldung: 29.06.1994
(73) Patentinhaber: BASF Aktiengesellschaft, 67063 Ludwigshafen (DE)
(72) Erfinder: SCHAEFER, Bernd, D-6749 Dierbach (DE); BUSCHMANN, Ernst, D-6700 Ludwigshafen (DE); REISSENWEBER, Gernot, D-6737 Boehl-Iggelheim (DE)
(86) Internationale Anmeldenummer: EP9202007
(87) Internationale Veröffentlichungsnummer: WO9305053

(56) Entgegenhaltungen:
- EP-A- 0 421 225
- Chem. Ber., Band. 94, 1961 G. Märkl: "Synthese von alfa-halogenierten, alfa. beta-ungesättigten Carbonsäuren mit Triphenylphosphin-halogen- -carbomethoxy- methylenen ", p2996-3004
- J. Org. Chem., Band. 27, 1962 D.B. Denney et al.: "The preparation and reactions of some halophosphoranes. p 2877-2883
- SYNTHETIC COMMUNICATIONS, Band. 19, Nr. 16, 1989 A.L. Braga et al.: "Pyrolysis of alfa-halophosphoranes - haloacetylenes ", p2877-2883

## Beschreibung

Die vorliegende Erfindung betrifft ein verbessertes Verfahren zur Herstellung von α-Chlor-methylen-triorganylphosphoran-derivaten der allgemeinen Formel I 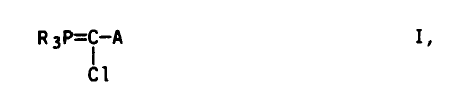 in der die Reste R gleich oder verschieden sein können und C-organische Substituenten bedeuten und in der A für Cyano oder eine Gruppe CO-B steht und B einen C-organischen oder O-organischen Rest mit 1-12 C-Atomen bedeutet, der sich unter Chlorierungsbedingungen inert verhält, durch Chlorierung von Phosphoranen der Formel II 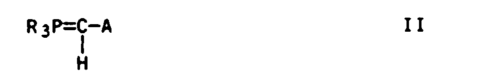 mit Chlor.

Es ist allgemein bekannt, daß Phosphorane II unter Bildung von a-Chlor-methylen-triphenylphosphoran-derivaten chloriert werden können (vgl. Houben-Weyl, Methoden der organischen Chemie, Band E1, Georg Thieme Verlag 1982, S. 636-639).

Nach G. Märkl [Chem. Ber. 94, 2996 (1961)] geht man hierbei so vor, daß man Triphenylphosphin-carbomethoxy-methylen (II; A = CO-OCH₃) mit verdünntem Chlorgas oder mit Phenyljodidchlorid chloriert. Nachteilig an dieser Methode ist jedoch, daß man das Produkt I nur mit maximal 50 %iger Ausbeute erhält, weil sich als Nebenprodukt das Phosphoniumchlorid IIIa

B-CH₂-P^{⊕}(C₆H₅)₃ Cl^{⊖} IIIa

bildet.

Ferner beschreiben D.B. Denney und S.T. Ross [J. Org. Chem. 27, 998 (1962)] zwei Methoden zur Chlorierung von Verbindungen des Typs II (A = CO-CH₃, CO-OC₂H₅, CO-C₆H₅) in Methylenchlorid bei (-60) bis (-70)°C, wobei als Chlorierungsmittel eine Lösung von Chlor in Tetrachlorkohlenstoff dient:

Nach der ersten Methode nimmt man die Chlorierung in Gegenwart von tertiären Aminen vor. Abgesehen davon, daß diese Arbeitsweise wegen der tiefen Temperaturen technisch aufwendig ist, besteht die Gefahr der Bildung von explosivem Stickstofftrichlorid durch Nebenreaktion des Chlors mit dem Amin.

Bei der zweiten Methode arbeitet man ohne Base, wobei man zunächst das Phosphoniumchlorid von I [(C₆H₅)₃P^{⊕} CH₂-A Cl^{⊖}] als Feststoff erhält, welcher abgetrennt, in Wasser/Aceton gelöst und dann mit Natriumhydroxid in I überführt wird. Unbefriedigend hierbei ist die Reaktionsführung in zwei getrennten Verfahrensschritten.

Auch in Synthetic Communications, Bd. 19, Nr. 16 (1989) S. 2877 - 2883 wird die Umsetzung von II zu I, wobei R für Phenyl und A für -CO-(Phenyl, p-Tolyl, p-Chlorphenyl, tert.Butyl) stehen, als zweistufige Reaktion beschrieben. Zur Chlorierung wird auch hier eine Chlorlösung in Tetrachlorkohlenstoff verwendet, in der zweiten Stufe wird I mit Soda in einer Wasser-Methylenchloridlösung freigesetzt.
Weitere bekannte Verfahren [G. Märkl., Chem. Ber. 95, 3003 (1962); J. Bestmann und R. Armsen, Synthesis, 590 (1970) sowie EP-A 421 225] sind deswegen unwirtschaftlich, weil man hierbei von teuren (Phenyljodidchlorid, N-Chlor-4-toluolsulfonsäureamid-Natrium [Chloramin T]) oder als Feststoff zu handhabenden
Chlorierungsmitteln (Chlorkalk) ausgeht. Ihre Verwendung führt ferner zu einem hohen Anteil an Nebenprodukten, die entsorgt oder zwecks Rückführung in das Verfahren mit hohem Aufwand regeneriert werden müssen.

Aufgabe der vorliegenden Erfindung war es daher, eine einfache und technisch wirtschaftliche Methode zur Herstellung der α-Chlor-methylen-triorganylphosphoran-derivate I bereitzustellen.

Demgemäß wurde ein Verfahren zur Herstellung von α-Chlormethylen-triorganylphosphoran-derivaten der allgemeinen Formel I 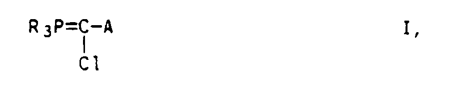 durch Chlorierung von Phosphoranen der Formel II 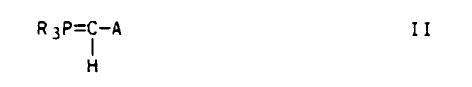 mit Chlor gefunden, welches dadurch gekennzeichnet ist, daß man die Chlorierung in Gegenwart von Alkalimetallhydroxid als Chlorwasserstoffakzeptor vornimmt, und daß man hierbei das Chlor und die Base nach Mapgabe ihres Verbrauches synchron, aber getrennt in das Reaktionsgemisch einleitet.

Das erfindungsgemäße Verfahren läßt sich mit Erfolg zur Synthese aller definitionsgemäßen α-Chlor-methylen-triorganylphosphoranderivate I anwenden, vor allem auf solche Verbindungen, in denen A für eine Gruppe CO-B steht und B die folgende Bedeutung hat:
- Wasserstoff;
- eine unverzweigte oder verzweigte C₁-C₄-Alkylgruppe wie Methyl, Ethyl, n-Propyl, Isopropyl, n-Butyl, sec.-Butyl und tert.-Butyl, wobei die Alkylgruppe noch eine C₁-C₄-Alkoxygruppe wie Methoxy, Ethoxy, Isopropoxy und tert.-Butoxy, tragen kann;
- eine Cyclopropyl-, Cyclobutyl-, Cyclopentyl- oder Cyclohexylgruppe;
- eine unverzweigte oder verzweigte C₁-C₈-Alkoxygruppe, insbesondere eine C₁-C₆-Alkoxygruppe wie Methoxy, Ethoxy, n-Propoxy, 1-Methylethoxy, n-Butoxy, 1-Methyl-propoxy, 2-Methylpropoxy, 1,1-Dimethylethoxy, n-Pentoxy, 1-Methylbutoxy, 2-Methylbutoxy, 3-Methylbutoxy, 2,2-Dimethylpropoxy, 1-Ethylpropoxy, n-Hexoxy, 1,1-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy und 1-Ethyl-2-methylpropoxy, vorzugsweise Methoxy und Ethoxy;
- eine unverzweigte oder verzweigte C₁-C₆-Alkylthiogruppe wie Methylthio, Ethylthio, n-Propylthio, 1-Methylethylthio, n-Butylthio, 1-Methylpropylthio, 2-Methylpropylthio, 1,1-Dimethylethylthio, n-Pentylthio, 1-Methylbutylthio, 2-Methylbutylthio, 3-Methylbutylthio, 2,2-Dimethylpropylthio, 1-Ethylpropylthio, n-Hexylthio, 1,1-Dimethylpropylthio, 1,2-Dimethylpropylthio, 1-Methylpentylthio, 2-Methylpentylthio, 3-Methylpentylthio, 4-Methylpentylthio, 1,1-Dimethylbutylthio, 1,2-Dimethylbutylthio, 1,3-Dimethylbutylthio, 2,2-Dimethylbutylthio, 2,3-Dimethylbutylthio, 3,3-Dimethylbutylthio, 1-Ethylbutylthio, 2-Ethylbutylthio, 1,1,2-Trimethylpropylthio, 1,2,2-Trimethylpropylthio, 1-Ethyl-1-methylpropylthio und 1-Ethyl-2-methylpropylthio, vorzugsweise Methylthio und Ethylthio;
- eine C₁-C₆-Alkoxy-C₁-C₆-alkoxygruppe, insbesondere eine C₁-C₄-Alkoxy-C₁-C₄-alkoxygruppe wie Methoxymethoxy, Ethoxymethyloxy, n-Propoxymethoxy, (1-Methylethoxy)methoxy, n-Butoxymethoxy, (1-Methylpropoxy)methoxy, (2-Methylpropoxy)methoxy, (1,1-Dimethylethoxy)methoxy, Methoxyethoxy, Ethoxyethoxy, n-Propoxyethoxy, (1-Methylethoxy)ethoxy, n-Butoxyethoxy, (1-Methylpropoxy)ethoxy, (2-Methylpropoxy)ethoxy, (1,1-Dimethylethoxy)ethoxy, 3-(Methoxy)propoxy, 2-(Methoxy)propoxy und 2-(Ethoxy)propoxy, vorzugsweise Methoxymethoxy;
- eine Arylgruppe, eine Aryloxygruppe oder eine Aryl-C₁-C₆-alkoxygruppe, wobei die Arylgruppe jeweils unsubstituiert sein oder einen Phenylrest oder ein bis drei der folgenden Reste tragen kann: C₁-C₄-Alkyl, C₁-C₄-Alkoxy, Nitro, Trifluormethyl und/oder Halogen; insbesondere die Phenylgruppe, eine C₁-C₄-Alkylphenylgruppe wie o-, m-, p-Tolyl, eine C₁-C₄-Alkoxyphenylgruppe wie o-, m-, p-Methoxyphenyl, eine Halogenphenylgruppe wie o-, m-, p-Fluorphenyl, o-, m-, p-Chlorphenyl und o-, m-, p-Bromphenyl, die o-, m-, p-Nitrophenylgruppe, die o-, m-, p-(Trifluormethyl)phenylgruppe, die o-, m-, p-Biphenylgruppe, die Naphthylgruppe, die Phenoxygruppe, die Naphthoxygruppe, eine Phenyl-C₁-C₆-alkoxygruppe oder eine Naphthyl-C₁-C₆-alkylgruppe wie Benzyloxy, 1-Phenylethoxy, 2-Phenylethoxy, 1-Phenylprop-1-yloxy, 2-Phenyl-prop-lyloxy, 3-Phenylprop-1-yloxy, 1-Phenylbut-1-yloxy, 2-Phenyl-but-1-yloxy, 3-Phenylbut-1-yloxy, 4-Phenylbut-1-yloxy, 1-Phenyl-but-2yloxy, 2-Phenylbut-2-yloxy, 3-Phenylbut-2-yloxy, 3-Phenyl-but-2yloxy, 4-Phenylbut-2-yloxy, 1-(Phenylmethyl)-eth-1-yloxy, 1-(Phenylmethyl)-1-(methyl)-eth-1-yloxy, 1-(Phenylmethyl)-prop-1-yloxy, Naphtylmethyloxy, 1-Naphthylethyloxy, 2-Naphthylethyloxy, 1-Naphthylprop-1-yloxy, 2-Naphthyl-prop-1-yloxy, 3-Naphthylprop-1-yloxy, 1-Naphthylbut-l-yloxy, 2-Naphthylbut-1-yloxy, 3-Naphthylbut-1-yloxy, 4-Naphthylbut-1-yloxy, 1-Naphthylbut-2-yloxy, 2-Naphthylbut-2-yloxy, 3-Naphthylbut-2-yloxy, 3-Naphthylbut-2-yloxy, 4-Naphthylbut-2-yloxy, 1-(Naphthylmethyl)-eth-1-yloxy, 1-(Naphthylmethyl)-l-(methyl)eth-1-yloxy, und 1-(Naphthylmethyl)-prop-1-yloxy, vorzugsweise Phenyl, Phenoxy, Benzyloxy, 2-Phenylethoxy, 2-Naphthyl und 2-Naphthylethoxy,
wobei der Phenyl- und Naphthylrest jeweils noch ein bis drei für die Umsetzung inerte Substituenten tragen kann.

Die Reste R am Phosphor können gleich oder verschieden sein und stehen beispielsweise für verzweigte oder unverzweigte C₁-C₈-Alkylgruppen, C₅- bis C₆-Cycloalkylgruppen und insbesondere für Phenyl, das weitere (für die Umsetzung inerte) Substituenten, beispielsweise C₁-C₄-Alkyl wie Methyl, Ethyl und tert.-Butyl, C₁-C₄-Alkoxy wie Methoxy oder Halogen wie Fluor, Chlor und Brom, tragen kann. Bevorzugt sind unsubstituierte Phenylreste, da der für die Herstellung der Ylide verwendete Ausgangsstoff Triphenylphosphin besonders kostengünstig ist und zudem bei den Umsetzungen das sehr reaktionsträge und gut abtrennbare feste Triphenylphosphinoxid entsteht.

Die als Ausgangsstoffe dienenden Phosphorane II sind bekannt bzw. auf bekannte Weise erhältlich [vgl. A. Maercker, Org. Reactions 14, 402 (1965), Ramirez und Dershowitz, J. Org. Chem. 22, 41 (1957), G. Wittig und W. Haag, Chem. Ber. 88, 1654 (1955) und 0. Isler et al., Helv. Chim. Acta 40, 1242 (1957)], indem man ein tertiäres Phosphin und einer Verbindung Hal-CH₂-A zu einem Phosphoniumsalz der Formel III

R₃P^{⊕}-CH₂-A Hal^{⊖} III

in der Hal^{⊖} für Halogenid, insbesondere Chlorid, steht, umsetzt, und dieses Salz ohne Isolierung aus der Reaktionsmischung mittels Base in das Phosphoran II überführt.

Die Umsetzung erfolgt in einem inerten, vorzugsweise polaren Lösungs- oder Verdünnungsmittel, zweckmäßigerweise in demjenigen, in dem nachfolgend die Chlorierung des Phosphorans II erfolgt.

Die Menge an Lösungsmittel ist so zu bemessen, daß sich die Ausgangsstoffe vollständig lösen. Normalerweise ist die 5- bis 10-fache Menge an Lösungsmittel, bezogen auf die Menge an tertiärem Phosphin, ausreichend.

Für eine vollständige Umsetzung sind mindestens äquimolare Mengen an tertiärem Phosphin und α-Halogenacylderivat nötig, jedoch kann auch ein geringer überschuß der einen oder anderen Komponente, etwa bis zu 10 mol-%.

Im allgemeinen arbeitet man bei Normaldruck, wobei die Reaktionstemperatur im allgemeinen zwischen 20°C und der Siedetemperatur des jeweiligen Lösungsmittels liegt.

Vorzugsweise werden die Phosphorane II ohne Isolierung aus der Reaktionsmischung im selben oder in einem anderen Reaktionsgefäß dem erfindungsgemäßen Verfahren unterworfen.

Inerte Lösungs- oder Verdünnungsmittel für das Phosphoran II sind beispielsweise aromatische Kohlenwasserstoffe wie Benzol, Toluol, o-, m-, p-Xylol und Nitrobenzol, chlorierte Kohlenwasserstoffe wie Methylenchlorid, Chloroform, Tetrachlorkohlenstoff, 1,2-Dichlorethan, Chlorbenzol, 1,2-, 1,3- und 1,4-Dichlorbenzol sowie besonders bevorzugt aliphatische und cycloaliphatische Alkohole mit 1 bis 6 C-Atomen wie Methanol, Ethanol, n-Propanol, Isopropanol, n-Butanol, Isobutanol, n-Pentanol, n-Hexanol und Cyclohexanol.

Auch Alkohol/Wasser-Gemische, mit einem Wasseranteil bis etwa 40 Vol-%, sind als Lösungsmittel gut geeignet.

Die Menge an Lösungsmittel ist nicht kritisch; in der Regel ist die 5- bis 10-fache molare Menge an Lösungsmittel, bezogen auf die Menge an II, ausreichend.

Erfindungsgemäß erfolgt die Chlorierung in Gegenwart von Alkalimetallhydroxid als Chlorwasserstoffakzeptor, wobei die Base während der Zugabe des Chlors nach Maßgabe ihres Verbrauches in die Lösung von II eingebracht wird.

Bevorzugt verwendet man hierfür reines Chlorgas, jedoch ist auch die Verwendung von flüssigem Chlor oder von Mischungen aus Chlorgas und inerten Gasen wie Stickstoff, Argon, Kohlendioxid und Wasserdampf möglich, wobei in diesen Fällen Mischungsverhältnisse von 5 bis 50 mol-% Chlor auf ein Mol Inertgas in Betracht kommen.

Für eine vollständige Umsetzung werden mindestens 1,0 mol Chlor (Cl₂) pro mol Phosphoran II benötigt. Bevorzugt sind äquimolare Mengen oder ein geringer Unter- oder überschuß an Chlor bis etwa 10 mol-%, bezogen auf die Menge an II.

Besonders bevorzugt werden die Alkalimetallhydroxide Natrium- und Kaliumhydroxid.

Das Alkalimetallhydroxid kann als Suspension oder bevorzugt als wässrige Lösung eingesetzt werden. Ihre Menge ist so zu bemessen, daß der pH-Wert des Reaktionsgemisches während der Reaktion nicht über 9, bevorzugt zwischen 7 und 8, liegt. In der Regel sind 2 Äquivalente Base pro Mol Phosphoran II ausreichend.

Im allgemeinen liegt die Reaktionstemperatur zwischen (-50) und 50°C, vorzugsweise zwischen (-15) und 30°C.

Besondere Bedingungen bezüglich des Drucks sind nicht erforderlich; normalerweise nimmt man die Umsetzung daher bei Atmosphärendruck vor. Geringerer oder höherer Druck ist möglich, bringt aber normalerweise keine Vorteile.

Die Aufarbeitung des Produktes erfolgt wie üblich, beispielsweise mittels Extraktion oder Filtration. In der Regel empfiehlt es sich jedoch, die Produkte I ohne Isolierung aus der Reaktionsmischung weiter umzusetzen. Bevorzugt ist die Umsetzung mit einer Carbonylverbindungen der Formel IV 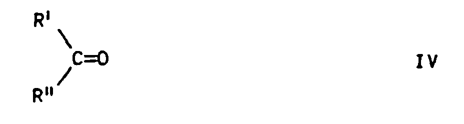 in der R' und R" unabhängig voneinander Wasserstoff oder C-organische Reste bedeuten [vgl. z.B. G. Märkl, Chem. Ber. 94, 2996 (1961), EP-A 207 894, EP-A 340 708, EP-A 384 199, die Japanische Offenlegungsschrift Nr. 155358/84 und das Japanische Patent Kokai 152 465/1985], wobei man die entsprechenden olefinisch ungesättigten Verbindungen der Formel V 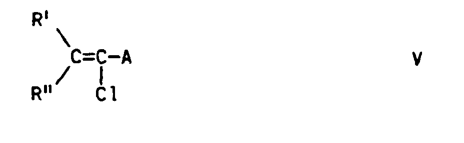 erhält.

Unter den Carbonylverbindungen IV sind Benzaldehyd, Nitro- und Aminobenzaldehyd, 3,4,5,6-Tetrahydrophthalimido-benzaldehyd, 3-Chlor-2-(3-formylphenyl)-4,5,6,7-tetrahydroimidazol sowie deren mono- und dihalogenierten Derivate besonders bevorzugt.

Die nach dem erfindungsgemäßen Verfahren auf einfache Weise in guten Ausbeuten herzustellenden α-Chlor-methylen-triorganylphosphoran-derivate I sind wertvolle Zwischenprodukte zur Synthese von Pflanzenschutzmitteln und Pharmaka. Insbesondere dienen sie zur Herstellung von Zimtsäureestern VI, die wichtige Ausgangsstoffe für Herbizide und Wachstumsregulatoren darstellen (vgl. z.B. EP-A 300 387 und EP-A 240 659):

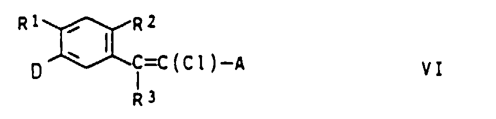

In Formel VI stehen D für die Nitrogruppe, die Aminogruppe oder eine geschützte Aminogruppe wie 3,4,5,6-Tetrahydrophthalimido, R¹ für Wasserstoff oder Halogen, vorzugsweise Fluor, R² für Halogen, vorzugsweise Chlor und R³ für Wasserstoff oder C₁-C₄-Alkyl.

### Beispiel 1

2,α-Dichlor-5-nitrozimtsäuremethylester 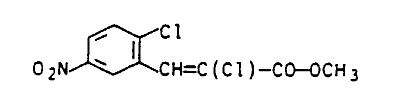
a) Herstellung des Phosphorans II:
   Eine Lösung von 157 g (0,6 mol) Triphenylphosphin und 68,4 g (0,59 mol) Chloressigsäuremethylester in 150 ml Methanol wurde 2 Std. auf Siedetemperatur erhitzt. Zu dem erhaltenen Gemisch gab man bei 20-25°C 1050 ml Methanol und 25 ml 25 gew.-%ige wässrige Natronlauge.
b) Chlorierung des Phosphorans II:
   In die oben hergestellte Lösung leitete man unter leichter Kühlung auf 15-20°C 42 g (0,59 mol) Chlorgas, wobei durch gleichzeitiges Zudosieren von 25 gew.-%iger wässriger Natronlauge der pH-Wert auf etwa 7,4 gehalten wurde. Nach beendeter Zugabe von Chlorgas wurde die Reaktionsmischung noch 1 Std. gerührt. Das so hergestellte α-Chlor-methoxycarbonyl-methylen-triphenylphosphoran kann ohne Isolierung für weitere Synthesen verwendet werden.
c) Umsetzung von a-Chlor-methoxycarbonyl-methylen-triphenylphosphoran mit 2-Chlor-5-nitrobenzaldehyd:
   Die vorstehend erhaltene Reaktionsmischung wurde unter leichter Kühlung auf 15-20°C portionsweise mit 102 g (0,55 mol) 2-Chlor-5-nitrobenzaldehyd versetzt. Nach 2 Std. Rühren bei 20-25°C hydrolysierte man mit 300 ml Wasser, wonach der gebildete Feststoff abgetrennt, zweimal mit je 100 ml Wasser und zweimal mit je 100 ml Methanol gewaschen und anschliessend unter reduziertem Druck bei 50°C getrocknet wurde. Ausbeute: 75 % 2,α-Dichlor-3-nitro-zimtsäuremethylester; Fp.: 110-112°C.

### Beispiel 2

α-Chlor-4-nitrozimtsäureethylester 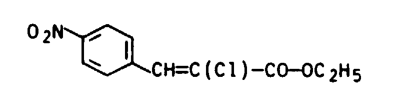 α-Chlor-ethoxycarbonyl-methylen-triphenylphosphoran wurde analog Beispiel 1 aus 157 g (0,6 mol) Triphenylphosphin und 72,3 g (0,59 mol) Chloressigsäureethylester in Ethanol hergestellt und anschliepend chloriert. Zur Herstellung von α-Chlor-4-nitrozimtsäureethylester wurde die erhaltene Reaktionsmischung analog Beispiel 1 mit 83,1 g (0,55 mol) 4-Nitrobenzaldehyd umgesetzt. Ausbeute: 86 %; Fp.: 108-110°C.

### Beispiel 3

2,α-Dichlor-5-nitrozimtsäureethylester 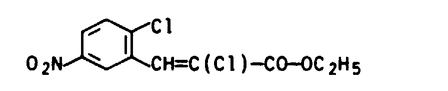
a) Herstellung des Phosphorans II:
   Eine Lösung von 157 g (0,6 mol) Triphenylphosphin und 72,3 g (0,59 mol) Chloressigsäureethylester in 150 ml Ethanol wurde 2 Std. auf Siedetemperatur erhitzt. Zu dem erhaltenen Gemisch gab man bei 20-25°C 800 ml Ethanol, 200 ml Wasser und 10 ml 50 gew.-%ige wässrige Natronlauge.
b) Chlorierung des Phosphorans II:
   In die oben hergestellte Lösung leitete man unter leichter Kühlung auf 15-20°C 42 g (0,59 mol) Chlorgas, wobei durch gleichzeitiges Zudosieren von 25 gew.-%iger wässriger Natronlauge der pH-Wert auf etwa 7,4 gehalten wurde. Nach beendeter Zugabe von Chlorgas wurde die Reaktionsmischung noch 1 Std. gerührt. Das so hergestellte α-Chlor-ethoxycarbonyl-methylen-triphenylphosphoran kann ohne Isolierung für weitere Synthesen verwendet werden.
c) Umsetzung von α-Chlor-ethoxycarbonyl-methylen-triphenylphosphoran mit 2-Chlor-5-nitrobenzaldehyd:
   Die vorstehend erhaltene Reaktionsmischung wurde unter leichter Kühlung auf 15-20°C portionsweise mit 102 g (0,55 mol) 2-Chlor-5-nitrobenzaldehyd versetzt. Nach 2 Std. Rühren bei 20-25°C hydrolysierte man mit 120 ml Wasser, wonach der gebildete Feststoff abgetrennt, zweimal mit je 100 ml Wasser und zweimal mit je 100 ml Methanol gewaschen und anschliessend unter reduziertem Druck bei 50°C getrocknet wurde. Ausbeute: 88 % 2,α-Dichlor-ethoxycarbonyl-methylester; Fp.: 96-98°C.

## Patentansprüche

1. Verfahren zur Herstellung von α-Chlor-methylen-triorganyl-phosphoran-derivaten der allgemeinen Formel I 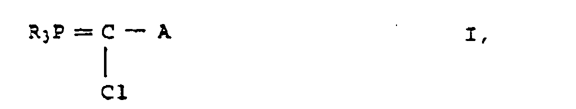 in der die Reste R gleiche oder verschiedene C-organische Substituenten bedeuten und in der A für cyano oder eine Gruppe CO-B steht und B einen C-organischen oder O-organischen Rest mit 1-12 C-Atomen bedeutet, der sich unter Chlorierungsbedingungen inert verhalt, durch Chlorierung von Phosphoranen der Formel II 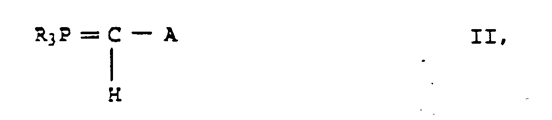 mit Chlor, dadurch gekennzeichnet, daß man die Chlorierung in Gegenwart von Alkalimetallhydroxid als Chlorwasserstoffakzeptor vornimmt, und daß man hierbei das Chlor und die Base nach Maßgabe ihres Verbrauches synchron, aber getrennt so in das Reaktionsgemisch einbringt, daß der pH-Wert wahrend der Reaktion nicht über 9 liegt.

2. Verfahren nach Anspruch 1, dadurch gekennzeichnet, daß man hierbei von einer Mischung aus II und einem inerten Lösungsmittel ausgeht, wie sie bei der Herstellung von II aus einem tertiären Phosphin und einer Verbindung Ha1-CH₂-A, wobei Hal für Halogen steht, und anschließende Umsetzung des hierbei entstehenden Phosphoniumsalzes mit einer Base anfällt.

3. Verfahren nach Anspruch 1, dadurch gekennzeichnet, daß man die Chlorierung mit unverdünntem Chlorgas vornimmt.

4. Verfahren nach Anspruch 2, dadurch gekennzeichnet, daß man die Chlorierung mit unverdünntem Chlorgas vornimmt.

5. Verfahren nach den Ansprüchen 1 bis 4, dadurch gekennzeichnet, daß man die Chlorierung in einem niederen Alkohol als Lösungsmittel vornimmt.

6. Verfahren zur Herstellung olefinisch ungesättigter Verbindungen der Formel V 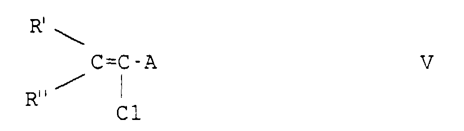 in der R' und R" Wasserstoff oder C-organische Reste bedeuten, durch Umsetzung eines α-Chlor-methylen-triorganylphosphoranderivates I mit einer Carbonylverbindung IV 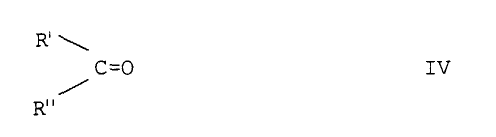 dadurch gekennzeichnet, daß man hierzu das I enthaltende Reaktionsgemisch einsetzt, wie es nach den Verfahren gemäß den Ansprüchen 1 bis 5 anfällt.

## Claims

1. A process for preparing α-chloromethylenetriorgano-phosphorane derivatives of the general formula I 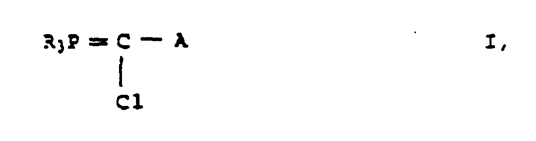 where the radicals are identical or different C-organic substituents and where A is cyano or a group CO-B and B is a C-organic or O-organic radical having from 1 to 12 C atoms which is inert under chlorination conditions, by chlorination of phosphoranes of the formula II 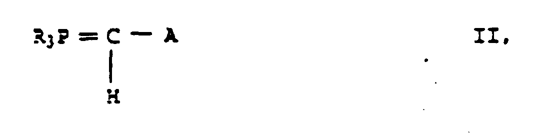 with chlorine, characterized in that the chlorination is carried out in the presence of an alkali metal hydroxide as hydrogen chloride acceptor, and in that the chlorine and the base are added to the reaction mixture at their rate of consumption synchronously but separately in such a way that the pH does not exceed 9 during the reaction.

2. A process according to Claim 1, characterized in that a mixture of II and an inert solvent, as obtained on preparing II from a tertiary phosphine and a compound Hal-CH₂-A where Hal is halogen and then reacting the phosphonium salt formed with a base, is used as starting material.

3. A process according to Claim 1, characterized in that the chlorination is carried out using undiluted chlorine gas.

4. A process according to Claim 2, characterized in that the chlorination is carried out using undiluted chlorine gas.

5. A process according to Claims 1 to 4, characterized in that the chlorination is carried out in a lower alcohol as solvent.

6. A process for preparing olefinically unsaturated compounds of the formula V 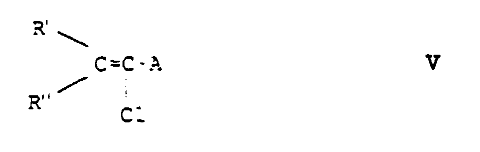 where R' and R" are hydrogen or C-organic radicals, by reacting an α-chloromethylene-triorgano-phosphorane derivative I with a carbonyl compound IV 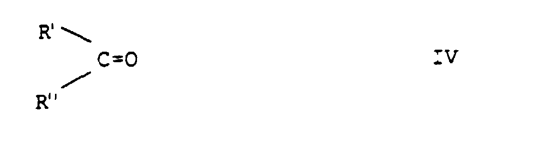 characterized in that the reaction mixture comprising I as obtained by the processes according to Claims 1 to 5 is used for this purpose.

## Revendications

1. Procédé pour la préparation d'alpha-chloro-méthylène-triorganylphosphoranes de formule générale I 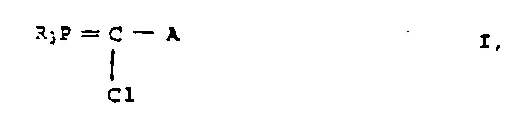 dans laquelle les symboles R, ayant des significations identiques ou différentes, représentent des substituants organiques carbonés, A représente un groupe cyano ou un groupe CO-B et B un radical organique carboné ou un radical organique oxygéné en C1-C12 inerte dans les conditions de la chloruration, par chloruration de phosphoranes de formule II 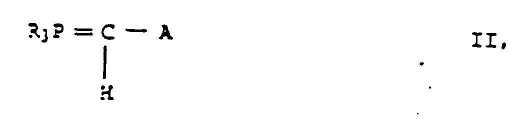 à l'aide du chlore élémentaire, caractérisé par le fait que l'on procède à la chloruration en présence d'un hydroxyde de métal alcalin qui sert d'accepteur du chlorure d'hydrogène et par le fait que l'on introduit le chlore et la base dans le mélange de réaction au fur et à mesure de leur consommation, simultanément mais séparément, en sorte que, dans le cours de la réaction, le pH ne dépasse pas 9.

2. Procédé selon la revendication 1, caractérisé par le fait que l'on part d'un mélange de II et d'un solvant inerte tel qu'obtenu à la préparation de II à partir d'une phosphine tertiaire et d'un composé Hal-CH₂-A, Hal représentant un halogène, avec réaction subséquente du sel de phosphonium formé avec une base.

3. Procédé selon la revendication 1, caractérisé par le fait que l'on procède à la chloruration à l'aide de chlore gazeux non dilué.

4. Procédé selon la revendication 2, caractérisé par le fait que l'on procède à la chloruration à l'aide de chlore gazeux non dilué.

5. Procédé selon les revendications 1 à 4, caractérisé par le fait que l'on procède à la chloruration dans un alcool inférieur qui sert de solvant.

6. Procédé pour la préparation de composés à insaturation oléfinique répondant à la formule V 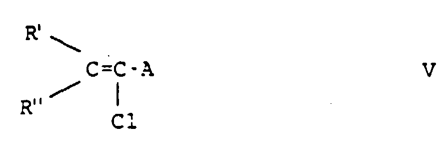 dans laquelle R' et R" représentent l'hydrogène ou des radicaux organiques carbonés, par réaction d'un alpha-chloro-méthylènetriorganyl-phosphorane I avec un dérivé carbonylé IV 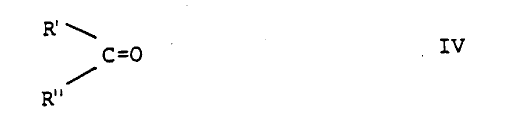 caractérisé par le fait que l'on met en oeuvre à cet effet le mélange de réaction contenant I tel qu'obtenu par les procédés selon les revendications 1 à 5.
